# EUROPEAN PATENT APPLICATION

(11) **EP 4 848 082 A1**
(43) Date of publication of application: **02.12.2026**
(21) Application number: 24923434.5
(22) Date of filing: 01.11.2024
(51) Int. Cl.: G06F 9/4401

(54) **METHOD AND APPARATUS FOR DETERMINING TIME PARAMETER**

(30) Priority: 08.02.2024 CN 202410179369
(71) Applicant: Huawei Technologies Co., Ltd., Shenzhen, Guangdong 518129 (CN)
(72) Inventor: MA, Qiyou, Shenzhen, Guangdong 518129 (CN)
(74) Representative: Huawei European IPR
(86) International application number: PCT/CN2024/129361
(87) International publication number: WO 2025/167230

(57) **Abstract**

This application provides a time parameter determining method and apparatus, and relates to the chip field, to determine time parameters of adapted scenarios. This ensures user experience. The method includes: determining a type of a configuration request; and performing an operation of the configuration request based on a time parameter corresponding to the type of the configuration request. The time parameter corresponding to the type of the configuration request is one of a plurality of groups of time parameters.

## Description

This application claims priority to Chinese Patent Application No. 202410179369.7, filed with the China National Intellectual Property Administration on February 8, 2024 and entitled "TIME PARAMETER DETERMINING METHOD AND APPARATUS", which is incorporated herein by reference in its entirety.

### TECHNICAL FIELD

This application relates to the chip field, and in particular, to a time parameter determining method and apparatus.

### BACKGROUND

In the field of mobile phone terminals, due to high sensitivity to power consumption, various low power consumption technologies and methods for chips are required to improve a battery life of the terminals. As a storage component of the current mobile phone terminals, universal flash storage (universal flash storage, UFS) defines a comprehensive low-power consumption mechanism in the UFS standard protocol, to reduce the power consumption of storage components.

UniPro Hibernate_Mode (hibernate mode) is a commonly used UFS low-power mode. Except for the off mode, UniPro Hibernate_Mode is a lowest power consumption mode. UniPro Hibernate_Mode may also be referred to as Hibernate8 (H8).

In the UFS protocol, entry into the hibernate mode is proactively initiated by a UFS host side. Hibernate modes are classified into Suspend H8 (suspend) and Auto H8 (auto). In Suspend H8, software on the host side needs to first actively deliver an SSU command at an HCI layer, and then deliver a hibernate request at a UniPro layer. In Auto H8, when there is no command on the UFS HCI for a long period of time, the host side logic automatically delivers a UniPro Hibernate request.

After receiving the UniPro Hibernate request, a device side needs to complete entry power retention and hardware power-off procedures within a period of time indicated by a parameter T_hibern8. After receiving an H8 exit request, the device side needs to complete entry restoration and hardware power-on procedures within a period of time specified by a parameter T_active. The time parameters T_hibern8 and T_active are important indicators for measuring H8 performance. Vendors expect the indicators to be minimized. However, during actual application, H8 time parameters can only be configured based on worst-case scenarios, resulting in excessively long H8 entry and exit durations and affecting user experience.

### SUMMARY

Embodiments of this application provide a time parameter determining method and apparatus, to determine time parameters of adapted scenarios, so as to ensure user experience.

To achieve the foregoing objectives, the following technical solutions are used in embodiments of this application.

According to a first aspect, a time parameter determining method is provided, and applied to a first chip in a communication system. A plurality of groups of time parameters are configured in the first chip, and at least one time parameter has different values among different groups of time parameters. The method may include: determining a type of a configuration request; and performing an operation of the configuration request based on a time parameter corresponding to the type of the configuration request. The time parameter corresponding to the type of the configuration request is one of the plurality of groups of time parameters.

Based on the solution provided in this application, because the type of the configuration request reflects a specific scenario, provided that the time parameter corresponding to the type of the configuration request adapts to the scenario and the operation of the configuration request is performed based on the time parameter corresponding to the type, determined time parameters can adapt to the scenario. This meets a time characteristic of the scenario, and meets user experience in the scenario.

In a possible implementation, the configuration request may be a hibernate request in a UFS. Therefore, the determined time parameters adapt to different hibernate scenarios in the UFS, to meet time characteristics of different hibernate scenarios, and meet user experience in different hibernate scenarios.

In another possible implementation, the first chip is a UFS host, and the determining the type of the configuration request may be specifically implemented as follows: receiving a first indication from a software layer of the host, and determining that a type of the hibernate request is a suspend hibernate request Suspend H8. The first indication indicates to send the hibernate request. Because Suspend H8 is initiated by the software layer of the host, when the indication from the software layer of the host is received, it may be determined that the type of the hibernate request is Suspend H8. Therefore, the type of the hibernate request is determined based on a source of the indication information, which is compatible with an existing protocol.

In another possible implementation, the first chip is a UFS host, and the determining the type of the configuration request may be specifically implemented as follows: receiving a second indication from a host controller interface (host controller interface, HCI) of the host, and determining that a type of the hibernate request is an automatic hibernate request Auto H8, where the second indication indicates to send the hibernate request. Because Auto H8 is initiated by an HCI layer of the host, when the indication from the HCI layer of the host is received, it may be determined that the type of the hibernate request is Auto H8. Therefore, the type of the hibernate request is determined based on a source of the indication information, which is compatible with an existing protocol.

In another possible implementation, the first chip is a UFS host, and the determining the type of the configuration request may be specifically implemented as follows: receiving a third indication from an HCI of the host, where the third indication indicates that a type of the hibernate request is Auto H8 or Suspend H8; and determining that the type of the hibernate request is a type indicated by the third indication. In this implementation, after determining the type of the current hibernate request, the HCI sends the third indication to indicate the type of the current hibernate request, so that hardware logic of the host determines the type of the hibernate request. Therefore, the type of the hibernate request is determined based on a source of the indication information, which is compatible with an existing protocol.

In another possible implementation, the method provided in this application may further include: sending the hibernate request that carries a fourth indication to a UFS device, where the fourth indication indicates the type of the hibernate request. In this implementation, the host sends the indication to the device, to indicate the type of the hibernate request. Therefore, a device side simply identifies the type of the hibernate request, to determine time parameters that adapt to scenarios, and improve user experience.

In another possible implementation, the first chip is a UFS device, and the determining the type of the configuration request may be specifically implemented as: receiving the hibernate request from a UFS host, where the hibernate request includes a fourth indication indicating a type; and determining that a type of the hibernate request is the type indicated by the fourth indication. In this implementation, the host sends the indication to the device, to indicate the type of the hibernate request. Therefore, the device side simply identifies the type of the hibernate request, to determine time parameters that adapt to scenarios, and improve user experience.

In another possible implementation, the first chip is a UFS device, and the determining the type of the configuration request may be specifically implemented as follows: The UFS device receives the hibernate request from a UFS host; and if a UFS transport layer (UFS Transport Layer, UTP) of the device receives an SSU (START STOP UNIT) command, determines that a type of the hibernate request is Suspend H8; and if the UTP layer of the device does not receive an SSU command, determines that the type of the hibernate request is Auto H8. In this implementation, after receiving the hibernate request from the UFS host, the UFS device identifies the type of the hibernate request based on whether the UTP layer receives the SSU command. The logic, compatible with the existing protocol, identifies the type of the hibernate request, and further determines the time parameters that adapt to the scenarios, to improve user experience.

In another possible implementation, the hibernate request may be a hibernate state entering request or a hibernate state exiting request.

In another possible implementation, the method provided in this application may further include: after link establishment is completed, obtaining a plurality of groups of time parameters configured in a second chip; and calculating the plurality of groups of time parameters of the first chip based on the plurality of groups of time parameters configured in the second chip.

In another possible implementation, the method provided in this application may further include: after link establishment is completed, configuring a plurality of groups of time parameters for the second chip.

In another possible implementation, the method provided in this application may further include: sending a data frame to the second chip, where the data frame includes the plurality of groups of time parameters.

In another possible implementation, the data frame is PACP_CAP_EXT2_ind, or PACP_CAP_EXT1_ind, or PACP_CAP_ind in a UniPro protocol.

In another possible implementation, a first time parameter corresponding to Suspend H8 is greater than the first time parameter corresponding to Auto H8, and the first time parameter is any time parameter in one group of time parameters.

In another possible implementation, one group of time parameters includes one or more of T_hibern8, T_active, SaveConfigTime, StallNoConfigTime, SleepNoConfigTime, or TxTrailingClocks in the UniPro protocol.

T_hibern8 indicates a duration of entry into a hibernate state, and T_active indicates a duration of exit from the hibernate state. SaveConfigTime indicates that an initiator can initiate a change to a new gear only after a time interval (namely, a waiting duration), in a STALL/SLEEP state (no data transmission state), following a power mode change. StallNoConfigTime indicates an interval between data bursts in a high-speed FAST AUTO mode. SleepNoConfigTime indicates an interval between data bursts in a low-speed SLOW AUTO mode. TxTrailingClocks indicates time after which a clock (Tx Symbol Clock) is disabled following an end of BURST.

According to a second aspect, a time parameter determining apparatus is provided, and used in a first chip in a communication system. A plurality of groups of time parameters are configured in the first chip, and at least one time parameter has different values among different groups of time parameters. The apparatus may include a determining unit and a processing unit.

A first obtaining unit is configured to determine a type of a configuration request.

A second obtaining unit is configured to perform an operation of the configuration request based on a time parameter corresponding to the type of the configuration request. The time parameter corresponding to the type is one of the plurality of groups of time parameters.

In a possible implementation, the configuration request may be a hibernate request in a UFS. Therefore, determined time parameters adapt to different hibernate scenarios in the UFS, to meet time characteristics of different hibernate scenarios, and meet user experience in different hibernate scenarios.

In another possible implementation, the first chip is a UFS host, and the determining unit is specifically configured to receive a first indication from a software layer of the host, and determine that a type of the hibernate request is a suspend hibernate request Suspend H8. The first indication indicates to send the hibernate request. Because Suspend H8 is initiated by the software layer of the host, when the indication from the software layer of the host is received, it may be determined that the type of the hibernate request is Suspend H8. Therefore, the type of the hibernate request is determined based on a source of the indication information, which is compatible with an existing protocol.

In another possible implementation, the first chip is a UFS host, and the determining unit is specifically configured to: receive a second indication from an HCI of the host, and determine that a type of the hibernate request is an automatic hibernate request Auto H8, where the second indication indicates to send the hibernate request. Because Auto H8 is initiated by an HCI layer of the host, when the indication from the HCI layer of the host is received, it may be determined that the type of the hibernate request is Auto H8. Therefore, the type of the hibernate request is determined based on a source of the indication information, which is compatible with an existing protocol.

In another possible implementation, the first chip is a UFS host, and the determining unit is specifically configured to: receive a third indication from an HCI of the host, where the third indication indicates that a type of the hibernate request is Auto H8 or Suspend H8; and determine that the type of the hibernate request is a type indicated by the third indication. In this implementation, after determining the type of the current hibernate request, the HCI sends the third indication to indicate the type of the current hibernate request, so that hardware logic of the host determines the type of the hibernate request. Therefore, the type of the hibernate request is determined based on a source of the indication information, which is compatible with an existing protocol.

In another possible implementation, the apparatus further includes: a sending unit, configured to send the hibernate request that carries a fourth indication to a UFS device, where the fourth indication indicates the type of the hibernate request. In this implementation, the host sends the indication to the device, to indicate the type of the hibernate request. Therefore, the device side simply identifies the type of the hibernate request, to determine time parameters that adapt to scenarios, and improve user experience.

In another possible implementation, the first chip is a UFS device, and the determining unit is specifically configured to: receive the hibernate request from a UFS host, where the hibernate request includes a fourth indication indicating a type; and determine that a type of the hibernate request is the type indicated by the fourth indication. In this implementation, the host sends the indication to the device, to indicate the type of the hibernate request. Therefore, the device side simply identifies the type of the hibernate request, to determine time parameters that adapt to scenarios, and improve user experience.

In another possible implementation, the first chip is a UFS device, and the determining unit is specifically used by the UFS device to: receive the hibernate request from a UFS host; and if a UFS transport layer (UFS Transport Layer, UTP) of the device receives an SSU (START STOP UNIT) command, determine that a type of the hibernate request is Suspend H8; and if the UTP layer of the device does not receive an SSU command, determine that the type of the hibernate request is Auto H8. In this implementation, after receiving the hibernate request from the UFS host, the UFS device identifies the type of the hibernate request based on whether the UTP layer receives the SSU command. The logic, compatible with the existing protocol, identifies the type of the hibernate request, and further determines the time parameters that adapt to the scenarios, to improve user experience.

In another possible implementation, the hibernate request may be a hibernate state entering request or a hibernate state exiting request.

In another possible implementation, the apparatus further includes an obtaining unit, configured to: after link establishment is completed, obtain a plurality of groups of time parameters configured in a second chip; and calculate the plurality of groups of time parameters of the first chip based on the plurality of groups of time parameters configured in the second chip.

In another possible implementation, the apparatus further includes a configuration unit, configured to: after link establishment is completed, configure a plurality of groups of time parameters for the second chip.

In another possible implementation, the apparatus further includes a sending unit, configured to send a data frame to the second chip, where the data frame includes the plurality of groups of time parameters.

In another possible implementation, the data frame is PACP_CAP_EXT2_ind, or PACP_CAP_EXT1_ind, or PACP_CAP_ind.

In another possible implementation, a first time parameter corresponding to Suspend H8 is greater than the first time parameter corresponding to Auto H8, and the first time parameter is any time parameter in one group of time parameters.

In another possible implementation, one group of time parameters includes one or more of T_hibern8, T_active, SaveConfigTime, StallNoConfigTime, SleepNoConfigTime, or TxTrailingClocks in the UniPro protocol.

According to a third aspect, a chip is provided. The chip includes a memory and at least one processor. The memory is configured to store a group of computer instructions. When the processor executes the computer instructions, the chip performs operation steps of the method in the first aspect or any possible implementation.

According to a fourth aspect, a mobile terminal is provided. The mobile terminal includes the chip in the third aspect.

According to a fifth aspect, a computer-readable storage medium is provided, including computer software instructions. When the computer software instructions are run on a computer, the computer is enabled to perform operation steps of the method in the first aspect or any possible implementation.

According to a sixth aspect, a computer program product is provided. When the computer program product runs on a computer, the computer is enabled to perform operation steps of the method in the first aspect or any possible implementation.

### BRIEF DESCRIPTION OF DRAWINGS

FIG. 1 is a diagram of a structure of a protocol stack in a UFS protocol;
FIG. 2 is a diagram of a structure of a mobile phone according to an embodiment of this application;
FIG. 3 is a schematic flowchart of a time parameter determining method according to an embodiment of this application;
FIG. 4 is a diagram of a structure of a time parameter determining apparatus according to an embodiment of this application; and
FIG. 5 is a diagram of a structure of another time parameter determining apparatus according to an embodiment of this application.

### DESCRIPTION OF EMBODIMENTS

For ease of understanding, some concepts related to embodiments of this application are described for reference by using examples. Details are as follows:

A UFS usually indicates: (1) a storage interface protocol of mobile devices; and (2) a storage device using the protocol. The storage device using the UFS protocol is a memory, built based on a serial data transmission technology, that allows a plurality of erases or writes during operations.

A unified protocol (UniPro) may be understood as a hierarchical protocol defined for interconnection between devices and components inside consumer electronic products such as mobile devices, and is applicable to components including an application processor, a co-processor, and a modem, and data transmission such as control signals, batch data transmission, and packetized streams. The UniPro serves as a data link layer of the UFS, and is responsible for a connection between a host and a device.

An HCI (host controller interface) provides a unified hardware interface for the UFS, so that host controllers can use a unified driver. UFSs are used in different platform devices, and different platform devices communicate with the UFSs through HCIs.

An SSU command, a basic command in the UFS protocol, is used by the UFS to switch a power consumption mode during power management. The SSU command is used to enable/disable an LU, flush a cache to the device, or load/eject the device. The host sends the SSU command to the well-known logical unit of the UFS device, to switch the power consumption mode of the device.

The following describes the technical solutions in embodiments of this application with reference to accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments, unless otherwise specified, "a plurality of" means two or more.

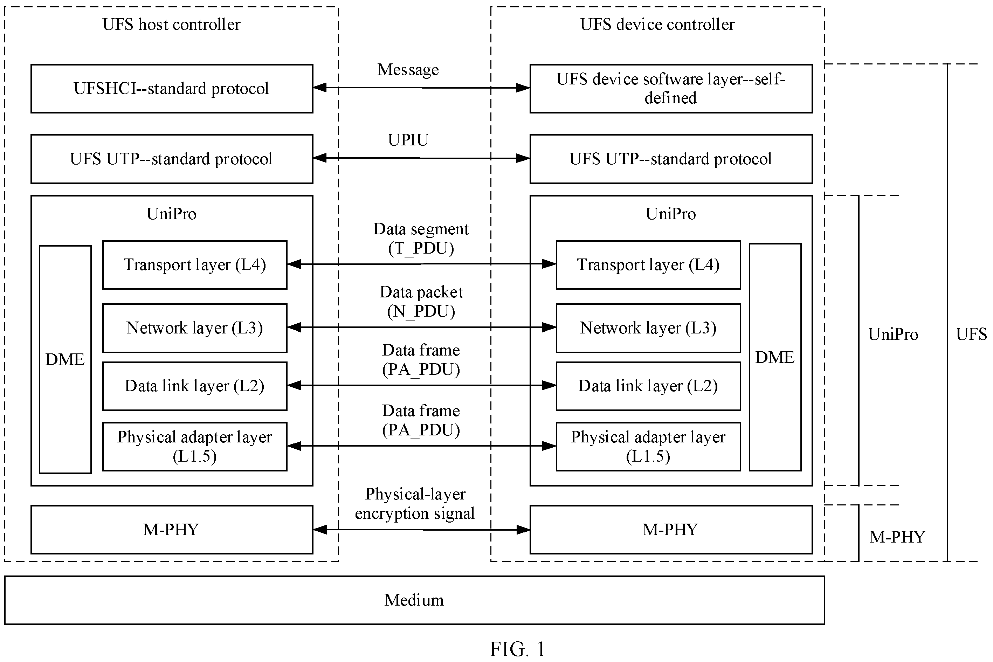

The UFS protocol specifically includes an application layer (UFS Application Layer, UAP), a transport layer (UTP), and a link layer (UFS InterConnect Layer, UIC). The application layer may send a small computer system interface (small computer system interface, SCSI) command, the SCSI command is encapsulated into a UFS protocol information unit (UFS Protocol Information Unit, UPIU) at the transport layer, and the data is sent to a peer end through the link layer. The link layer includes a data link layer (UniPro) and a physical layer (M-PHY). The data link layer is responsible for the connection between the host and the device. The M-PHY is responsible for data transmission, for example, transmitting data via differential signals. For example, a structure of a protocol stack in the UFS protocol may be shown in FIG. 1.

The data link layer includes a transmitter circuit and a receiver circuit, and the physical layer also includes a transmitter circuit and a receiver circuit. For the host or the device, a transmitter circuit in the interconnection interface may include the transmitter circuit at the data link layer and the transmitter circuit at the physical layer, and a receiver circuit in the interconnection interface may include the receiver circuit at the data link layer and the receiver circuit at the physical layer.

The protocol of the data link layer is a complete protocol stack. As shown in FIG. 1, the UniPro protocol specification mainly includes four layers: a physical adapter layer (L1.5), a data link layer (L2), a network layer (L3), a transport layer (L4), and a device management entity (Device Management Entity, DME). Layers below the physical adapter layer are a physical layer and a medium layer, and a layer above the physical adapter layer is application-specific protocols.

The following describes different types of UniPro Hibernate_Mode in the UFS standard protocol. Hibernate modes are classified into Suspend H8 and Auto H8.

In Suspend H8, software on the host side needs to first actively deliver an SSU command at an HCI layer, and then deliver a hibernate request at a UniPro layer. The host side in Suspend H8 usually powers down (turns off) the host controller (controller).

In Auto H8, when there is no command on the HCI for a long time, the host side logic automatically delivers a UniPro Hibernate request. In Auto-H8, the host side is usually not powered off.

After receiving the UniPro Hibernate request, the device performs entry power retention and hardware power-off procedures. After an H8 exit request is received, entry restoration and hardware power-on procedures are performed.

For specific scenarios in which Hibernate_Mode occurs, specific mechanisms for triggering different types of Hibernate_Mode are not limited in embodiments of this application. For example, in an idle scenario, Suspend H8 is mainly delivered, and a terminal may perform the idle scenario in a screen-off state. In a user scenario (that is, a user uses a mobile terminal), Auto H8 is mainly delivered.

The following compares parameters of Suspend H8 and Auto H8 in various dimensions from the perspective of the host side and the device side.

Table 1 shows comparison between parameters of Suspend H8 and Auto H8 in various dimensions on the host side. Table 2 shows comparison between parameters of Suspend H8 and Auto H8 in various dimensions on the device side.

**Table 1**

| H8 mode | Suspend H8 | Auto H8 |
|---|---|---|
| Power gate (power gate) | An entire controller is powered off, and configuration is performed for power retention. | Do not power off |
| Occurrence frequency | 100 seconds | Less than 100 ms |
| Power consumption | Low | High |
| Overall time consumption | Long | Short |

**Table 2**

| H8 mode | Suspend H8 | Auto H8 |
|---|---|---|
| Persistent RAM | The persistent RAM is small, and data such as entries needs to be flushed to a flash memory. | There are a plurality of persistent RAMs, and power retention needs to be performed on data such as entries, to reduce dynamic power consumption caused by flushing. |
| Occurrence frequency | In an idle scenario, a host sends an SSU command to enter Suspend H8, and a time interval is long. | In a user scenario, H8 commands are frequently delivered, and a time interval is short. |
| Power consumption | Low static power consumption, and high dynamic power consumption | High static power consumption, and high dynamic power consumption |
| Overall time consumption | Long | Short |

Usually, time parameters are defined in the UFS, and indicate processes related to UFS system time.

For example, the time parameters may include one or more of T_hibern8, T_active, SaveConfigTime, StallNoConfigTime, SleepNoConfigTime, or TxTrailingClocks in the UniPro protocol.

T_hibern8 indicates a duration of entry into a hibernate state, and T_active indicates a duration of exit from the hibernate state. SaveConfigTime indicates that an initiator can initiate a change to a new gear only after a time interval (namely, a waiting duration), in a STALL/SLEEP state (no data transmission state), following a power mode change. StallNoConfigTime indicates an interval between data bursts in a high-speed FAST AUTO mode. SleepNoConfigTime indicates an interval between data bursts in a low-speed SLOW AUTO mode. TxTrailingClocks indicates time after which a clock (Tx Symbol Clock) is disabled following an end of BURST.

The following uses the time parameters T_hibern8 and T_active as an example.

After receiving the UniPro Hibernate request, the device performs entry power retention and hardware power-off procedures. This process needs to be completed within the period of time indicated by T_hibern8. After an H8 exit request is received, entry restoration and hardware power-on procedures need to be performed. This process needs to be completed within the period of time indicated by T_active.

In addition, the host also needs to have corresponding time parameters (T_hibern8 and T_active), to determine that the host and the device complete the process of entering H8, or complete the process of exiting H8, and ensure that the host completes the power-off or power-on process. The time parameters of the host may be determined based on the time parameters on the device side and capabilities of the host.

According to the existing UniPro protocol, it is specified that capability exchange is performed in a link establishment phase. The host or the device obtains parameters T_active and T_hibern8 of a peer end Rx (in a receiving direction), calculates time parameter values corresponding to a local end Tx (in a transmitting direction) based on local capabilities, and configures the time parameter values at the local end. For a specific calculation process, refer to the UniPro protocol. Details are not described in this application.

According to the current M-PHY protocol (as shown in Table 3), the two parameters each have a fine-grained mode (in a unit of 4/8/16/32 microseconds) and a coarse-grained mode (100 microseconds). T_hibern8 ranges from 1 to 128, and T_active ranges from 1 to 14.

**Table 3**

| Attribute or parameter | Value | Units |
|---|---|---|
| Attribute or parameter | Value | Units |
| Rx_Advanced_Granularity_Capability | 4, 8, 16, 32 | Microseconds µs |
| Rx_Advanced_Hibern8Time_Capability | 1 to 128 | - - |
| Rx_Advanced_Min_ActivateTime_Capability | 1 to 14 | - - |
| Rx_Min_ActivateTime_Capability | 1 to 9 | 100 µs |
| Tx_Advanced_Granularity | 1 to 15 | - - |
| Tx_Advanced_Granularity_Capability | 4, 8, 16, 32 | µs |
| Tx_Advanced_Hibern8Time_Capability | 1 to 128 | - - |
| Tx_Min_ActivateTime | 1 to 15 | 100 µs |

It can be learned from the foregoing content that the time parameters are important indicators for directly measuring H8 performance. Vendors expect the indicators to be minimized. The two capability parameters need to be specified based on worst capabilities in worst scenarios. For example, overall time consumption of Suspend H8 is longer than that of Auto H8. The worst parameters are specified based on time parameters in Suspend H8. Consequently, in the Auto H8 scenario, poor parameters are used, which directly affects time for entering/exiting H8 and affects user experience.

In view of this, this application provides a time parameter determining method. Different time parameters corresponding to different types of requests are configured, to determine time parameters that adapt to the requests, and on a premise that the time parameters can adapt to different scenarios, determine time parameters with a shortest duration that adapt to the scenarios. This improves user experience.

The solutions provided in this application may be applied to a mobile terminal. The mobile device may be a mobile phone, a tablet computer, a notebook computer, an ultra-mobile personal computer (ultra-mobile personal computer, UMPC), a handheld computer, a netbook, a personal digital assistant (personal digital assistant, PDA), a wearable electronic device, a virtual reality device, or the like. This is not limited in embodiments of this application.

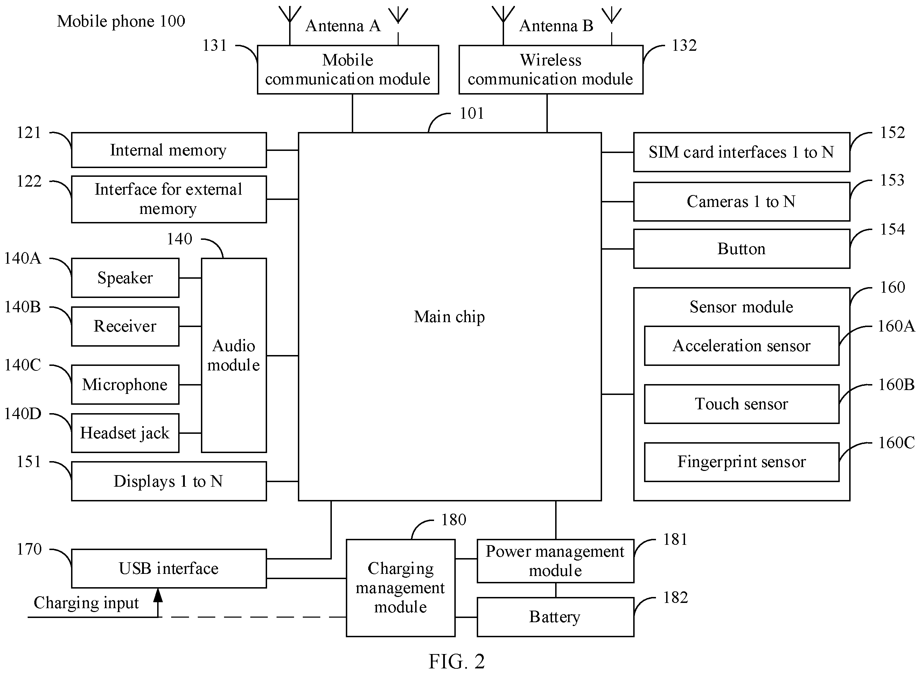

For example, as shown in FIG. 2, the mobile device in embodiments of this application may be a mobile phone 100. The following specifically describes embodiments by using the mobile phone 100 as an example. It should be understood that the mobile phone 100 shown in the figure is merely an example of the electronic device, and the mobile phone 100 may include more or fewer components than those shown in the figure, may combine two or more components, or may have different component configurations.

As shown in FIG. 2, the mobile phone 100 includes a main chip 101, an internal memory 121, an interface 122 for external memory, an antenna A, a mobile communication module 131, an antenna B, a wireless communication module 132, an audio module 140, a speaker 140A, a receiver 140B, a microphone 140C, a headset jack 140D, a display 151, a subscriber identification module (subscriber identification module, SIM) card interface 152, a camera 153, a button 154, a sensor module 160, a universal serial bus (universal serial bus, USB) interface 170, a charging management module 180, a power management module 181, and a battery 182. In some other embodiments, the mobile phone 100 may further include a motor, an indicator, and the like.

The main chip 101 may include one or more processing units. For example, the main chip 101 may include an application processor (application processor, AP), a modem, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). It should be noted that different processing units may be independent components, or may be integrated into one or more independent processors, or may be integrated into a same component with another module in the mobile phone 100.

The internal memory 121 may be configured to store data and/or at least one computer program, and the at least one computer program includes instructions. Specifically, the internal memory 121 may include a program storage area and a data storage area. The program storage area may store at least one computer program. The computer program may include an application (for example, Gallery or Contacts), an operating system (for example, an Android operating system or an iOS operating system), another program, or the like. The data storage area may store at least one of data created in a process of using the mobile phone 100, data received from another device (for example, another mobile phone 100, a network device, or a server), data pre-stored before delivery, or the like. For example, the data stored in the internal memory 121 may be at least one piece of information such as an image, a file, or an identifier.

In some embodiments, the internal memory 121 may include a high-speed random access memory and/or a non-volatile memory. For example, the internal memory 121 includes one or more magnetic disk storage devices, a flash (Flash) memory, or a universal flash storage (universal flash storage, UFS).

The main chip 101 may invoke one or more computer programs and/or data stored in the internal memory 121, to enable the mobile phone 100 to implement one or more functions. This meets user requirements. For example, the main chip 101 may invoke instructions and data that are stored in the internal memory 121, to enable the electronic device to perform the time parameter determining method provided in embodiments of this application.

The interface 122 for external memory may be configured to connect to an external storage card (for example, a micro SD card), to extend a storage capability of the mobile phone 100. The external storage card communicates with the main chip 101 through the interface 122 for external memory, to implement a data storage function. For example, files such as images, music, and videos are stored in the external memory card.

In some embodiments, a buffer may be further disposed in the main chip 101, to store instructions and/or data that needs to be cyclically used by the main chip 101. If the main chip 101 needs to use the instructions or the data again, the instructions or the data may be directly invoked from the buffer. This helps avoid repeated access, and reduce waiting time of the main chip 101, to help improve system efficiency. For example, the buffer may be implemented by using a cache.

It should be understood that a structure of the mobile phone 100 shown in FIG. 2 is merely an example. The mobile phone 100 in embodiments of this application may include more or fewer components than those shown in the figure, may combine two or more components, or may have different component configurations. Various components shown in the figure may be implemented by hardware including one or more signal processing and/or application-specific integrated circuits, software, or a combination of hardware and software.

The main chip 101 may be the host in the UFS protocol, and the internal memory 121 may be the device in the UFS protocol.

The following describes embodiments of this application.

In one aspect, an embodiment of this application provides a time parameter determining method. The method may be applied to a first chip in a communication system, a plurality of groups of time parameters are configured in the first chip, and at least one time parameter has different values among different groups of time parameters.

For example, the first chip may be a host or a device in a UFS protocol. One group of time parameters includes one or more of T_hibern8, T_active, SaveConfigTime, StallNoConfigTime, SleepNoConfigTime, or TxTrailingClocks in a UniPro protocol.

For example, one group of time parameters may have lower power consumption, to correspond to one group of Suspend H8 with higher performance, but a duration of time parameters is long. One group of time parameters may have higher performance, to correspond to Auto H8, and a duration of time parameters is short. Therefore, different UFS H8 low-power consumption parameters (time parameters) are selected based on different scenarios, to ensure a reduction in power consumption, improve user experience, and enhance product competitiveness.

For example, a first time parameter corresponding to Suspend H8 is greater than a first time parameter corresponding to Auto H8, and the first time parameter is any time parameter in one group of time parameters.

It is clear that the solutions provided in embodiments of this application may also be applied to communication systems other than the UFS. For systems that require different time parameters in different scenarios, time parameters matching the scenarios may be determined based on the solutions provided in this application.

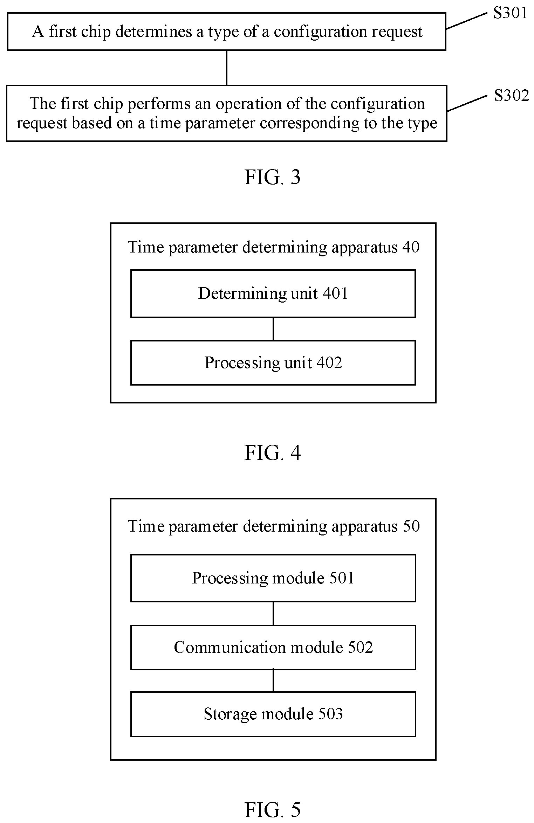

As shown in FIG. 3, a time parameter determining method provided in embodiments of this application may include the following steps.

S301: A first chip determines a type of a configuration request.

The configuration request may be a request that is transmitted between the first chip and another chip in a communication system and that is used to implement a configuration function. A specific type of the configuration request is not limited in embodiments of this application.

For example, the configuration request may be a hibernate request (H8 request) in a UFS. It is clear that the configuration request may alternatively be another request in the UFS. A type of the configuration request is not limited in embodiments of this application.

The following uses an example in which the configuration request is the hibernate request in the UFS to describe in detail determining of the type of the configuration request in S301, which may include but is not limited to the following several possible implementations:
Implementation 1: The first chip is a UFS host, and the determining the type of the configuration request is specifically implemented as follows: receiving a first indication from a software layer of the host, and determining that a type of the hibernate request is Suspend H8.

In the implementation 1, a UniPro layer of the first chip may receive the first indication from the software layer of the host.

The first indication indicates to send the hibernate request. A specific form and content of the first indication are not limited in embodiments of this application.

For example, the first indication may be a primitive or a command.

Implementation 2: The first chip is a UFS host, and the determining the type of the configuration request is specifically implemented as follows: receiving a second indication from an HCI of the host, and determining that a type of the hibernate request is Auto H8.

In the implementation 2, a UniPro layer of the first chip may receive the second indication from the HCI of the host.

The second indication indicates to send the hibernate request. A specific form and content of the second indication are not limited in embodiments of this application.

For example, the second indication may be a primitive or a command.

Implementation 3: The first chip is a UFS host, and the determining the type of the configuration request is specifically implemented as follows: receiving a third indication from an HCI of the host, where the third indication indicates that a type of the hibernate request is Auto H8 or Suspend H8; and determining that the type of the hibernate request is a type indicated by the third indication.

In the implementation 3, the HCI of the host may determine the type of the currently delivered hibernate request based on whether a software layer of the host delivers an SSU command. If the HCI observes that the software layer delivers the SSU command, it is determined that the currently delivered hibernate request is Suspend H8; and if the HCI does not observe that the software layer delivers the SSU command, it is determined that the currently delivered hibernate request is Auto H8.

In any one of the implementation 1 to the implementation 3, a hibernate type register may be added at the UniPro layer, to notify hardware logic of the host of the type of the delivered hibernate request.

Further, based on any one of the implementation 1 to the implementation 3, the solutions provided in embodiments of this application may further include: The first chip sends the hibernate request that carries a fourth indication to a UFS device, where the fourth indication indicates the type of the hibernate request. In other words, the hibernate request carries the fourth indication, so that the device determines the type of the hibernate request based on the fourth indication.

For example, PACP_PWR_req frame information of the original UniPro hibernate request may be modified, and a reserved field (that is, used as the fourth indication) in the PACP_PWR_req frame information indicates the type of the hibernate request, to identify the type of the hibernate request at an L1.5 on the device side.

For example, a format of the PACP_PWR_req frame information may be shown in Table 4, and the reserved field may be a reserved field in a Flags field.

**Table 4**

| | | | | | | | | | | | | | | | | | | | | |
|---|---|---|---|---|---|---|---|---|---|---|---|---|---|---|---|---|---|---|---|---|
| 16 | 15 | 14 | 13 | | 12 | 11 | 10 | | 9 | 8 | 7 | 6 | 5 | | 4 | 3 | 2 | | 1 | 0 |
| 1 | ESC_PA | | | | | | | | | | EscParam_PA=PACP_BEGIN | | | | | | | | | |
| 0 | PACP_FunctionID=PACP_PWR_req | | | | | | | | | | | | | | | | | | | |
| 0 | DevID | | | | | | | | | | Adapt | | Flags | | | | | | | |
| 0 | TxMode | | | TxLane | | | | TxGear | | | RxMode | | | RxLane | | | | RxGear | | |
| 0 | PAPowerModeUserDate[0] | | | | | | | | | | | | | | | | | | | |
| 0 | PAPowerModeUserDate[1] | | | | | | | | | | | | | | | | | | | |
| 0 | PAPowerModeUserDate[2] | | | | | | | | | | | | | | | | | | | |
| 0 | PAPowerModeUserDate[3] | | | | | | | | | | | | | | | | | | | |
| 16 | 15 | 14 | 13 | 12 | 11 | 10 | 9 | 8 | 7 | 6 | 5 | 4 | 3 | | 2 | | 1 | | 0 | |
| 0 | PAPowerModeUserDate[4] | | | | | | | | | | | | | | | | | | | |
| 0 | PAPowerModeUserDate[5] | | | | | | | | | | | | | | | | | | | |
| 0 | PAPowerModeUserDate[6] | | | | | | | | | | | | | | | | | | | |
| 0 | PAPowerModeUserDate[7] | | | | | | | | | | | | | | | | | | | |
| 0 | PAPowerModeUserDate[8] | | | | | | | | | | | | | | | | | | | |
| 0 | PAPowerModeUserDate[9] | | | | | | | | | | | | | | | | | | | |
| 0 | PAPowerModeUserDate[10] | | | | | | | | | | | | | | | | | | | |
| 0 | PAPowerModeUserDate[11] | | | | | | | | | | | | | | | | | | | |
| 0 | CCITT CRC-16 | | | | | | | | | | | | | | | | | | | |

Implementation 4: The first chip is a UFS device, and the determining the type of the configuration request is specifically implemented as: receiving the hibernate request from a UFS host, where the hibernate request includes a fourth indication indicating a type; and determining, by the device, that a type of the hibernate request is the type indicated by the fourth indication.

The implementation 4 corresponds to the implementation 3, and specific implementation is not described again.

However, because the SSU command on the device side is identified at the software layer, a processing delay of the solution in the implementation 4 is long.

Implementation 5: The first chip is a UFS device, and the determining the type of the configuration request is specifically implemented as follows: The device receives the hibernate request from a UFS host; and if a UTP layer of the device receives an SSU command, determines that a type of the hibernate request is Suspend H8; and if the UTP layer of the device does not receive an SSU command, determines that the type of the hibernate request is Auto H8.

It should be noted that the foregoing several implementations are merely examples for describing S301, and do not constitute a specific limitation.

Further, the hibernate request may include a request for entering a hibernate state or a request for exiting a hibernate state. This is not limited in embodiments of this application.

S302: The first chip performs an operation of the configuration request based on a time parameter corresponding to the type.

The time parameter corresponding to the type is one of a plurality of groups of time parameters.

Specifically, types, of configuration requests, corresponding to the plurality of groups of time parameters may be pre-configured. One group of time parameters corresponding to one type of configuration request is a group of time parameters with a shortest duration on a premise that a functional requirement of the type of configuration request is met.

In a possible implementation, the configuration request is a request for entering a hibernate state, a group of corresponding time parameters may include T_hibern8 and T_active, and the first chip completes a process of entering the hibernate state within a duration indicated by T_hibern8.

In another possible implementation, the configuration request is a request for exiting a hibernate state, a group of corresponding time parameters may include T_hibern8 and T_active, and the first chip completes a process of exiting the hibernate state within a duration indicated by T_active.

For processes of performing the configuration request based on other time parameters, details are not described in this embodiment of this application. For details, refer to the UniPro protocol.

Based on the solution provided in this application, because the type of the configuration request reflects a specific scenario, provided that the time parameter corresponding to the type of the configuration request adapts to the scenario and the operation of the configuration request is performed based on the time parameter corresponding to the type, determined time parameters can adapt to the scenario. This meets a time characteristic of the scenario, and meets user experience in the scenario.

Further, the first chip further needs to perform capability exchange with a second chip, to notify the peer end of capabilities (for example, an H8 capability) of the first chip.

In a possible implementation, the method provided in embodiments of this application may further include: performing capability exchange after link establishment is completed.

For example, the performing capability exchange after link establishment is completed may be specifically implemented as follows: After link establishment is completed, the first chip obtains a plurality of groups of time parameters configured in the second chip; and calculates the plurality of groups of time parameters of the first chip based on the plurality of groups of time parameters configured in the second chip.

The first chip may obtain, according to a Peer Get instruction, the plurality of groups of time parameters configured in the second chip.

For a specific calculation process, refer to a calculation formula for capability exchange in the Unipro protocol. Details are not described in this embodiment of this application.

For example, the performing capability exchange after link establishment is completed may be specifically implemented as follows: After link establishment is completed, the first chip configures a plurality of groups of time parameters for the second chip, to complete configuring of the plurality of groups of time parameters in the second chip.

The first chip may configure, according to a Peer Set instruction, the plurality of groups of time parameters for the second chip.

In another possible implementation, the method provided in embodiments of this application may further include: performing capability exchange during link establishment.

For example, the performing capability exchange during link establishment may be specifically implemented as follows: The first chip sends a data frame to the second chip, where the data frame includes the plurality of groups of time parameters configured in the first chip. Therefore, the second chip calculates the plurality of groups of time parameters on the local end based on the plurality of groups of time parameters configured in the first chip. A specific calculation process is not described herein.

The data frame sent by the first chip may be a reserved field, to which another group of H8 parameters are added, of PACP_CAP_EXT2_ind, or PACP_CAP_EXT1_ind, or PACP_CAP_ind in the Unipro protocol. The reserved field of the frame may be a reserved field in Flags, or may be a reserved field.

For example, a format of the PACP_CAP_ind frame may be shown in Table 5.

**Table 5**

| | | | | | | | | | | | | | | | | | | | | |
|---|---|---|---|---|---|---|---|---|---|---|---|---|---|---|---|---|---|---|---|---|
| 16 | 15 | 14 | 13 | 12 | 11 | | 10 | 9 | 8 | | 7 | 6 | | 5 | 4 | 3 | 2 | | 1 | 0 |
| 1 | ESC_PA | | | | | | | | | | EscParam_PA=PACP_BEGIN | | | | | | | | | |
| 0 | PACP_FunctionID=PACP_CAP_ind | | | | | | | | | | | | | | | | | | | |
| 0 | TSleepNoConfig | | | | | Reserved | | | | | | | Flags | | MaxHS | | | MaxPWM | | |
| 0 | TStallNoConfig | | | | | | | | | TSaveConfig | | | | | | | | | | |
| 0 | VersionInfo | | | | | | | | | | | | | | | | | | | |
| 0 | Reserved | | | | | | | | | | | | | | | | | | | |
| 0 | Reserved | | | | | | | | | | | | | | | | | | | |
| 0 | Reserved | | | | | | | | | | | | | | | | | | | |
| 0 | CCITT CRC-16 | | | | | | | | | | | | | | | | | | | |

For example, a format of the PACP_CAP_EXT1_ind frame may be shown in Table 6.

**Table 6**

| | | | | | | | | | | | | | | | | | |
|---|---|---|---|---|---|---|---|---|---|---|---|---|---|---|---|---|---|
| 16 | 15 | 14 | 13 | 12 | 11 | 10 | 9 | 8 | 7 | 6 | 5 | 4 | 3 | 2 | 1 | 0 | |
| 1 | ESC_PA | | | | | | | | EscParam_PA=PACP_BEGIN | | | | | | | | |
| 0 | PACP_FunctionID=PACP_CAP_EXT1_ind | | | | | | | | | | | | | | | | |
| 16 | 15 | 14 | 13 | 12 | 11 | 10 | 9 | 8 | 7 | | 6 | 5 | 4 | 3 | 2 | 1 | 0 |
| 0 | THIbern8 | | | | | | | | | TMInActivate | | | | Status | | | |
| 0 | TAdvHIbern8 | | | | | | | | | TAdvMInActivate | | | | RxAdvGranularity | | | |
| 0 | MInRxTrallingClocks | | | | | | | | | RxPwmBurstClosureLength | | | | | | | |
| 0 | RxLsPerpareLength | | | | | | | | | RxPwmG6G7SyncLength | | | | | | | |
| 0 | RxHsG1PerpareLength | | | | | | | | | RxHsG1SyncLength | | | | | | | |
| 0 | RxHsG2PerpareLength | | | | | | | | | RxHsG2SyncLength | | | | | | | |
| 0 | RxHsG3PerpareLength | | | | | | | | | RxHsG3SyncLength | | | | | | | |
| 0 | Reserved | | | | | | | | | | | | | | | | |
| 0 | Reserved | | | | | | | | | | | | | | | | |
| 0 | CCITT CRC-16 | | | | | | | | | | | | | | | | |

For example, a format of the PACP_CAP_EXT2_ind frame may be shown in Table 7.

**Table 7**

| | | | | | | | | | | | | | | | | | |
|---|---|---|---|---|---|---|---|---|---|---|---|---|---|---|---|---|---|
| 16 | 15 | 14 | 13 | 12 | 11 | 10 | 9 | 8 | 7 | | 6 | 5 | 4 | 3 | 2 | 1 | 0 |
| 1 | ESC_PA | | | | | | | | EscParam_PA=PACP_BEGIN | | | | | | | | |
| 0 | PACP_FunctionID=PACP_CAP_EXT2_ind | | | | | | | | | | | | | | | | |
| 0 | Reserved | | | | | | | | | | | | | | MaxHS | | |
| 0 | RxHsG4PerpareLength | | | | | | | | | RxHsG4SyncLength | | | | | | | |
| 0 | RxHsAdaptRefresh | | | | | | | | | RxHsAdaptlInltial | | | | | | | |
| 0 | Reserved | | | | | | | | | | | | | | | | |
| 0 | Reserved | | | | | | | | | | | | | | | | |
| 0 | Reserved | | | | | | | | | | | | | | | | |
| 0 | Reserved | | | | | | | | | | | | | | | | |
| 0 | Reserved | | | | | | | | | | | | | | | | |
| 0 | Reserved | | | | | | | | | | | | | | | | |
| 0 | Reserved | | | | | | | | | | | | | | | | |
| 0 | Reserved | | | | | | | | | | | | | | | | |
| 0 | Reserved | | | | | | | | | | | | | | | | |
| 0 | CCITT CRC-16 | | | | | | | | | | | | | | | | |

From a perspective of a working principle of the chip, the foregoing mainly describes the solutions provided in embodiments of this application. It may be understood that, to implement the foregoing functions, the chip or the like includes corresponding hardware structures and/or software modules for executing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the time parameter determining apparatus deployed in the chip may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that in embodiments of this application, division into the modules is an example, and is merely logical function division. During actual implementation, another division manner may be used.

When the functional modules are obtained through division based on the corresponding functions, FIG. 4 shows a time parameter determining apparatus 40 according to an embodiment of this application. The time parameter determining apparatus 40 is configured to implement functions of the first chip in the foregoing method embodiments. As shown in FIG. 4, the time parameter determining apparatus 40 may include a determining unit 401 and a processing unit 402. The determining unit 401 is configured to perform the process S301 in FIG. 3, and the processing unit 402 is configured to perform the process S302 in FIG. 3. All related content of the steps in the foregoing method embodiments may be cited in function descriptions of the corresponding functional modules. Details are not described herein again.

When an integrated unit is used, FIG. 5 shows a time parameter determining apparatus 50 according to an embodiment of this application, configured to implement functions of the first chip in the foregoing embodiments. The time parameter determining apparatus 50 includes a processing module 501 and a communication module 502. The processing module 501 is configured to control and manage an action of the time parameter determining apparatus 50, and the communication module 502 is configured to communicate with another device. For example, the processing module 501 is configured to perform either S301 or S302 in FIG. 3, and the communication module 502 is configured to perform an interaction process between devices in FIG. 3. The time parameter determining apparatus 50 may further include a storage module 503, configured to store program code and data of the time parameter determining apparatus 50.

The processing module 501 may be a processor or a controller, for example, may be a CPU, a general-purpose processor, a DSP, an ASIC, an FPGA or another programmable logic device, a transistor logic device, a hardware component, or any combination thereof. The processing module 501 may implement or execute various example logical blocks, modules, and circuits described based on content disclosed in this application. Alternatively, the processing module 501 may be a combination for implementing computing functions, for example, a combination of one or more microprocessors, or a combination of a DSP and a microprocessor. The communication module 502 may be a communication port, or may be a transceiver, a transceiver circuit, a communication interface, or the like. Alternatively, the communication interface may communicate with another device through the foregoing element that has receiving/sending functions. The foregoing element that has receiving/sending functions may be implemented through an antenna and/or a radio frequency apparatus. The storage module 503 may be a memory.

As described above, the time parameter determining apparatus 40 and the time parameter determining apparatus 50 provided in embodiments of this application may be configured to implement functions of the first chip in embodiments of this application. For ease of description, only parts related to embodiments of this application are shown. For specific technical details that are not disclosed, refer to embodiments of this application.

In another form of this embodiment, a chip is provided. The chip includes a memory and at least one processor. The memory is configured to store a group of computer instructions. When the processor executes the computer instructions, the chip performs the time parameter determining method in the foregoing method embodiments.

In another form of this embodiment, a computer-readable storage medium is provided. The computer-readable storage medium stores instructions. When the instructions are executed, the time parameter determining method in the foregoing method embodiments is performed.

In another form of this embodiment, a computer program product including instructions is provided. When the computer program product runs on a computer, the computer is enabled to perform the time parameter determining method in the foregoing method embodiments.

An embodiment of this application further provides a chip system. The chip system includes a processor, configured to implement the technical method in embodiments of this application. In a possible design, the chip system further includes a memory, configured to store program instructions and/or data that are essential for embodiments of this application. In a possible design, the chip system further includes a memory, configured to be used by the processor to invoke application program code stored in the memory. The chip system may include one or more chips, or may include a chip and another discrete component. This is not specifically limited in embodiments of this application. In another form of this embodiment, a mobile terminal is provided, and includes the foregoing chip or chip system.

Based on the descriptions about the foregoing implementations, a person skilled in the art may understand that, for a purpose of convenient and brief description, division into the foregoing functional modules is used as an example for illustration. During actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division. During actual implementation, there may be another division manner. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in the form of a software product. The software product is stored in a storage medium and includes several instructions for enabling a device (which may be a single-chip microcomputer, a chip or the like) or a processor (processor) to perform all or some of the steps of the methods described in embodiments of this application. The storage medium includes various media that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A time parameter determining method, applied to a first chip in a communication system, wherein a plurality of groups of time parameters are configured in the first chip, at least one time parameter has different values among different groups of time parameters, and the method comprises:
determining a type of a configuration request; and
performing an operation of the configuration request based on a time parameter corresponding to the type, wherein the time parameter corresponding to the type is one of the plurality of groups of time parameters.

2. The method according to claim 1, wherein the configuration request is a hibernate request in a universal flash storage UFS.

3. The method according to claim 2, wherein the first chip is a UFS host, and the determining the type of the configuration request comprises:
receiving a first indication from a software layer of the host, and determining that a type of the hibernate request is a suspend hibernate request Suspend H8, wherein the first indication indicates to send the hibernate request; or
receiving a second indication from a host controller interface HCI of the host, and determining that a type of the hibernate request is an automatic hibernate request Auto H8, wherein the second indication indicates to send the hibernate request.

4. The method according to claim 2, wherein the first chip is a UFS host, and the determining the type of the configuration request comprises:
receiving a third indication from a host controller interface HCI of the host, wherein the third indication indicates that a type of the hibernate request is an automatic hibernate request Auto H8 or a suspend hibernate request Suspend H8; and
determining that the type of the hibernate request is a type indicated by the third indication.

5. The method according to claim 3 or 4, wherein the method further comprises:
sending the hibernate request that carries a fourth indication to a UFS device, wherein the fourth indication indicates the type of the hibernate request.

6. The method according to claim 2, wherein the first chip is a UFS device, and the determining the type of the configuration request comprises:
receiving the hibernate request from a UFS host, wherein the hibernate request comprises a fourth indication indicating a type; and determining that a type of the hibernate request is the type indicated by the fourth indication; or
receiving the hibernate request from a UFS host; and if a UTP layer of the device receives an SSU command, determining that a type of the hibernate request is a suspend hibernate request Suspend H8; and if the UTP layer of the device does not receive an SSU command, determining that the type of the hibernate request is an automatic hibernate request Auto H8.

7. The method according to any one of claims 1 to 6, wherein the method further comprises:
after link establishment is completed, obtaining a plurality of groups of time parameters configured in a second chip; and
calculating the plurality of groups of time parameters of the first chip based on the plurality of groups of time parameters configured in the second chip.

8. The method according to any one of claims 1 to 6, wherein the method further comprises:
after link establishment is completed, configuring a plurality of groups of time parameters for the second chip.

9. The method according to any one of claims 1 to 6, wherein the method further comprises:
sending a data frame to the second chip, wherein the data frame comprises the plurality of groups of time parameters.

10. The method according to claim 9, wherein the data frame is PACP_CAP_EXT2_ind, or PACP_CAP_EXT1_ind, or PACP_CAP_ind.

11. The method according to any one of claims 3 to 6, wherein a first time parameter corresponding to Suspend H8 is greater than the first time parameter corresponding to Auto H8, and the first time parameter is any time parameter in one group of time parameters.

12. The method according to any one of claims 1 to 11, wherein one group of time parameters comprises one or more of T_hibern8, T_active, SaveConfigTime, StallNoConfigTime, SleepNoConfigTime, or TxTrailingClocks in a UniPro protocol.

13. A time parameter determining apparatus, used in a first chip in a communication system, wherein a plurality of groups of time parameters are configured in the first chip, at least one time parameter has different values among different groups of time parameters, and the apparatus comprises:
a determining unit, configured to determine a type of a configuration request; and
a processing unit, configured to perform an operation of the configuration request based on a time parameter corresponding to the type, wherein the time parameter corresponding to the type is one of the plurality of groups of time parameters.

14. The apparatus according to claim 13, wherein the configuration request is a hibernate request in a universal flash storage UFS.

15. The apparatus according to claim 14, wherein the first chip is a UFS host, and the determining unit is specifically configured to:
receive a first indication from a software layer of the host, and determine that a type of the hibernate request is a suspend hibernate request Suspend H8, wherein the first indication indicates to send the hibernate request; or
receive a second indication from a host controller interface HCI of the host, and determine that a type of the hibernate request is an automatic hibernate request Auto H8, wherein the second indication indicates to send the hibernate request.

16. The apparatus according to claim 14, wherein the first chip is a UFS host, and the determining unit is specifically configured to:
receive a third indication from a host controller interface HCI of the host, wherein the third indication indicates that a type of the hibernate request is an automatic hibernate request Auto H8 or a suspend hibernate request Suspend H8; and
determine that the type of the hibernate request is a type indicated by the third indication.

17. The apparatus according to claim 15 or 16, wherein the apparatus further comprises:
a sending unit, configured to send the hibernate request that carries a fourth indication to a UFS device, wherein the fourth indication indicates the type of the hibernate request.

18. The apparatus according to claim 14, wherein the first chip is a UFS device, and the determining unit is specifically configured to:
receive the hibernate request from a UFS host, wherein the hibernate request comprises a fourth indication indicating a type; and determine that a type of the hibernate request is the type indicated by the fourth indication; or
receive the hibernate request from a UFS host; and if a UTP layer of the device receives an SSU command, determine that a type of the hibernate request is a suspend hibernate request Suspend H8; and if the UTP layer of the device does not receive an SSU command, determine that the type of the hibernate request is an automatic hibernate request Auto H8.

19. The apparatus according to any one of claims 13 to 18, wherein the apparatus further comprises an obtaining unit, configured to:
after link establishment is completed, obtain a plurality of groups of time parameters configured in a second chip; and
calculate the plurality of groups of time parameters of the first chip based on the plurality of groups of time parameters configured in the second chip.

20. The apparatus according to any one of claims 13 to 18, wherein the apparatus further comprises a configuration unit, configured to:
after link establishment is completed, configure a plurality of groups of time parameters for the second chip.

21. The apparatus according to any one of claims 13 to 18, wherein the apparatus further comprises a sending unit, configured to:
send a data frame to the second chip, wherein the data frame comprises the plurality of groups of time parameters.

22. The apparatus according to claim 21, wherein the data frame is PACP_CAP_EXT2_ind, or PACP_CAP_EXT1_ind, or PACP_CAP_ind.

23. The apparatus according to any one of claims 15 to 18, wherein a first time parameter corresponding to Suspend H8 is greater than the first time parameter corresponding to Auto H8, and the first time parameter is any time parameter in one group of time parameters.

24. The apparatus according to any one of claims 13 to 23, wherein one group of time parameters comprises one or more of T_hibern8, T_active, SaveConfigTime, StallNoConfigTime, SleepNoConfigTime, or TxTrailingClocks in a UniPro protocol.

25. A chip, wherein the chip comprises a memory and at least one processor, the memory is configured to store a group of computer instructions; and when executing the group of computer instructions, the processor performs operation steps of the method according to any one of claims 1 to 12.

26. A mobile terminal, wherein the terminal device comprises the chip according to claim 25.

27. A computer-readable storage medium, comprising computer software instructions, wherein when the computer software instructions are run on a computer, the computer is enabled to perform operation steps of the method according to any one of claims 1 to 12.

28. A computer program product, wherein when the computer program product runs on a computer, the computer is enabled to perform the method according to any one of claims 1 to 12.
